# EUROPÄISCHE PATENTSCHRIFT

(11) **EP 3 281 074 B1**
(45) Veröffentlichungstag und Bekanntmachung des Hinweises auf die Patenterteilung: **29.09.2021**
(21) Anmeldenummer: 16712210.0
(22) Anmeldetag: 11.03.2016
(51) Int. Cl.: B60W 60/00, G05D 1/00, G05D 1/02, B60W 50/14, B60W 30/12, B60W 30/16, B60W 50/10

(54) **VERFAHREN ZUM BETREIBEN EINES KRAFTFAHRZEUGS UND KRAFTFAHRZEUG**
METHOD FOR OPERATING A MOTOR VEHICLE, AND MOTOR VEHICLE
PROCÉDÉ DE FONCTIONNEMENT D'UN VÉHICULE AUTOMOBILE ET VÉHICULE AUTOMOBILE

(30) Priorität: 08.04.2015 DE 102015004550
(43) Veröffentlichungstag der Anmeldung: 14.02.2018
(73) Patentinhaber: Audi AG, 85045 Ingolstadt (DE)
(72) Erfinder: ENTHALER, Achim, 85049 Ingolstadt (DE); HASMÜLLER, Benjamin, 86444 Affing (DE)
(86) Internationale Anmeldenummer: PCT/EP2016/000439
(87) Internationale Veröffentlichungsnummer: WO 2016/162104

(56) Entgegenhaltungen:
- DE-A1-102012 112 442
- DE-A1-102013 008 605
- US-A1- 2004 068 366
- US-A1- 2013 211 656

## Beschreibung

Die Erfindung betrifft ein Verfahren zum Betreiben eines Kraftfahrzeugs, das eine Navigationseinrichtung mit gespeicherten Streckenabschnitten und eine Steuerungseinrichtung zur Längs- und/oder Querführung des Kraftfahrzeugs in einem autonomen Betriebsmodus aufweist, wobei wenigstens einem Streckenabschnitt wenigstens ein Parameter zugeordnet ist, der festlegt, ob der Streckenabschnitt zum Betreiben des Kraftfahrzeugs in dem autonomen Betriebsmodus freigegeben ist.

Es sind Kraftfahrzeuge bekannt, die zum pilotierten Fahren ausgebildet sind und beispielsweise von einer Steuerungseinrichtung hinsichtlich der Längs- und/oder Querführung des Kraftfahrzeugs gesteuert werden. Während des pilotierten Fahrens, also dem Betreiben des Kraftfahrzeugs in einem autonomen Betriebsmodus, kann sich der Benutzer des Kraftfahrzeugs anderen Aufgaben bzw. Anwendungen zuwenden, da er nicht mehr am Fahrbetrieb beteiligt ist. Das Kraftfahrzeug, das in dem autonomen Betriebsmodus betrieben wird, ist sonach ein selbstfahrendes Kraftfahrzeug. Es ist möglich, dass ein solches Kraftfahrzeug gegebenenfalls unidirektional oder bidirektional mit seiner Umgebung vernetzt ist. Insbesondere kann das Kraftfahrzeug eine Kommunikationseinrichtung aufweisen, durch die eine Kommunikation mit einem Server oder einem weiteren Kraftfahrzeug ermöglicht wird.

Es ist ferner möglich, ein solches Kraftfahrzeug, das zum Betreiben in einem autonomen Betriebsmodus ausgebildet ist, ohne Insassen zu bewegen, da in dem autonomen Betriebsmodus kein Benutzer oder Fahrer benötigt wird.

Es gibt jedoch örtlich begrenzte Bereiche, in denen ein Betrieb von Kraftfahrzeugen in einem solchen autonomen Betriebsmodus nicht erwünscht bzw. verboten ist. Ferner gelten für verschiedene Bereiche spezielle, beispielsweise länderspezifische, Regelungen, die gegebenenfalls speziell das Betreiben des Kraftfahrzeugs in einem autonomen Betriebsmodus in dem entsprechenden Bereich betreffen.

Aus der DE 698 37 288 T2 ist ein Fahrzeug mit zwei umschaltbaren Fahrmodi bekannt, wobei der erste Fahrmodus ein autonomer Fahrmodus ist, der nur außerhalb von Fahrmodus-Sperrgebieten ausgeführt wird. Vor Erreichen eines solchen Sperrgebiets wird dem Fahrer die Notwendigkeit des Umschaltens des Fahrmodus mitgeteilt, so dass er sich auf eine manuelle Steuerung des Kraftfahrzeugs vorbereiten kann.

Dieses Verfahren weist den Nachteil auf, dass die Daten, das Sperrgebiet betreffend, auf einer CD-Rom (Compact Disk - Read only memory) gespeichert sind. Eine flexible Veränderung der Information, die angibt, welche Bereiche bzw. Streckenabschnitte in dem autonomen Fahrmodus befahren werden können, ist sonach nicht möglich.

Aus der US 2013/211656 A1 ist ein Verfahren zum Betreiben eines autonomen Fahrzeugs bekannt. Das Fahrzeug wird über einer für den autonomen Betrieb zuverlässigen Strecke geführt. Beim Vorliegen eines nicht zuverlässigen Streckenabschnitts wird das Fahrzeug in einen manuellen Betrieb überführt.

Der Erfindung liegt daher die Aufgabe zugrunde, ein demgegenüber verbessertes Verfahren anzugeben, bei dem eine vereinfachte Aktualisierung der Streckenabschnitte, sowie eine flexible Freischaltung bzw. Sperrung von einzelnen Streckenabschnitten möglich ist.

Zur Lösung dieser Aufgabe ist ein Verfahren nach dem Anspruch 1 vorgesehen.

Erfindungsgemäß ist wenigstens ein Server vorgesehen, auf dem der wenigstens eine Parameter, der festlegt, ob ein zugeordneter Streckenabschnitt zum Befahren in dem autonomen Betriebsmodus freigegeben ist, gespeichert ist. Die Navigationseinrichtung und/oder die Steuerungseinrichtung sind dazu ausgebildet, den Parameter für einen entsprechenden Streckenabschnitt von dem Server über eine drahtlose Kommunikationsverbindung abzurufen. Somit kann ebenfalls ein bereits abgerufener Parameter durch ein erneutes Abrufen aktualisiert werden. Dadurch wird eine flexible Aktualisierung einer Freischaltung bzw. eine Einschränkung eines Streckenabschnitts ermöglicht.

Erfindungsgemäß können beispielsweise beim Planen einer Route mittels der Navigationseinrichtung die entsprechenden Streckenabschnitte ermittelt werden, die zwischen einem Startabschnitt und einem Zielabschnitt zum Befahren benötigt bzw. durchfahren werden. Entsprechend der ermittelten Streckenabschnitte können die den entsprechenden Streckenabschnitten zugeordneten Parameter von dem Server abgerufen werden. Sonach kann bestimmt werden, ob einer der zu befahrenden Streckenabschnitte für das Befahren in dem autonomen Betriebsmodus nicht freigegeben ist.

Bei einem Streckenabschnitt, der zum Befahren in dem autonomen Betriebsmodus nicht freigegeben ist, kann es sich beispielsweise um einen sicherheitsrelevanten Bereich, einen temporär gesperrten Bereich, einen Bereich mit erhöhtem Verkehrsaufkommen, ein Krisengebiet, ein Kriegsgebiet, oder andere Bereiche handeln, in denen ein Betreiben von Kraftfahrzeugen in einem autonomen Betriebsmodus, das heißt pilotiert, nicht erwünscht oder nicht erlaubt ist.

In der Navigationseinrichtung kann sonach wenigstens ein Streckenabschnitt gespeichert bzw. hinterlegt sein, der zum Befahren in dem autonomen Betriebsmodus nicht freigegeben ist. Diesem Streckenabschnitt ist entsprechend ein Parameter zugeordnet, der festlegt, dass der Streckenabschnitt zum Befahren in dem autonomen Betriebsmodus nicht freigegeben ist. Ein Befahren eines solchen gesperrten Streckenabschnitts ist sonach in dem autonomen Betriebsmodus nicht möglich. Befindet sich ein solcher Streckenabschnitt auf der durch die Navigationseinrichtung geplanten Route, so sind Maßnahmen erforderlich, die im Folgenden erläutert werden.

Besonders bevorzugt kann vorgesehen sein, dass vor und/oder bei Erreichen eines Streckenabschnitts, der zum Befahren in dem autonomen Betriebsmodus nicht freigegeben ist, eine Warnung ausgegeben wird. Diese Warnung kann haptisch, beispielsweise durch Vibration wenigstens eines Teils des Kraftfahrzeugs, insbesondere eines Sitzes oder des Lenkrads, oder akustisch, beispielsweise über eine Ausgabe eines Audiosignals über wenigstens eine Ausgabeeinrichtung des Kraftfahrzeugs, oder optisch, beispielsweise über eine Anzeige auf einer Anzeigeeinrichtung des Kraftfahrzeugs, ausgegeben werden. Dies bietet den Vorteil, dass ein Benutzer des Kraftfahrzeugs darüber informiert wird, dass ein gesperrter Streckenabschnitt, der zum Befahren in dem autonomen Betriebsmodus nicht freigegeben ist, auf der geplanten bzw. der zu befahrenden Route liegt. Vorzugsweise kann die Warnung in einem definierten Abstand vor Erreichen des betreffenden Streckenabschnitts ausgegeben werden, was den Vorteil bietet, dass dem Benutzer des Kraftfahrzeugs bereits frühzeitig, abhängig von dem definierten Abstand, die Warnung ausgegeben wird, dieser demnach über den bevorstehenden gesperrten Streckenabschnitt informiert wird.

Daneben oder zusätzlich dazu kann bei Erreichen des betreffenden gesperrten Streckenabschnitts eine bzw. erneut eine Warnung ausgegeben werden. Die zuvor ausgegebene Warnung kann beispielsweise beinhalten, wie weit der gesperrte Streckenabschnitt entfernt ist und zudem kann ausgegeben werden, welche Anforderungen auf dem gesperrten Streckenabschnitt gelten. Diese möglichen Anforderungen sind bevorzugt in dem wenigstens einen Parameter enthalten und werden nachfolgend näher erläutert. Die Warnung bei Erreichen des gesperrten Streckenabschnitts kann bevorzugt eine Information an den Benutzer des Kraftfahrzeugs enthalten, die diesen über den angrenzenden gesperrten Streckenabschnitt informiert, der ein Weiterfahren des Kraftfahrzeugs in dem autonomen Betriebsmodus verhindert. Der Benutzer wird sonach vorteilhafterweise darüber informiert, dass und bevorzugt aus welchen Grund eine Weiterfahrt in dem autonomen Betriebsmodus nicht möglich ist und welche Einschränkungen auf dem entsprechenden Streckenabschnitt gelten, die zum Befahren des Streckenabschnitts gefordert werden.

Eine Weiterbildung des erfindungsgemäßen Verfahrens kann darin bestehen, dass in einem festgelegten Abstand vor oder bei Erreichen eines Streckenabschnitts, der zum Befahren in dem autonomen Betriebsmodus nicht freigegeben ist, die Steuerungseinrichtung in einen manuellen Betriebsmodus versetzt wird, in dem die Längs- und/oder Querführung des Kraftfahrzeugs vollständig durch einen Benutzer des Kraftfahrzeugs gesteuert wird. Gemäß dieser Ausbildung des erfindungsgemäßen Verfahrens wird die Steuerungseinrichtung von dem autonomen Betriebsmodus in einen manuellen Betriebsmodus versetzt. In dem manuellen Betriebsmodus wird das Kraftfahrzeug durch den Benutzer des Kraftfahrzeugs gesteuert. Somit ist ein Befahren des gesperrten Streckenabschnitts möglich, da die Steuerungseinrichtung dem Benutzer in dem manuellen Betriebsmodus die Längs- und/oder Querführung, insbesondere die Längs- und Querführung des Kraftfahrzeugs vollständig übergibt. Dies kann in einem festgelegten Abstand vor oder bei Erreichen des entsprechenden Streckenabschnitts geschehen. Bevorzugt wird der Wechsel der Betriebsmodi durch eine Warnung angekündigt. Beispielsweise kann dem Benutzer des Kraftfahrzeugs so mitgeteilt werden, dass in einem definierten Abstand oder bei Erreichen des Streckenabschnitts ein Wechsel von dem autonomen Betriebsmodus in den manuellen Betriebsmodus erforderlich ist und der Benutzer des Kraftfahrzeugs sonach die Steuerung des Kraftfahrzeugs übernehmen muss.

Ferner kann vorgesehen sein, dass der Benutzer dieser Maßnahme zustimmen oder diese ablehnen und/oder eine der weiteren Handlungsalternativen, die nachfolgend beschrieben werden, auswählen kann.

Nach einer erfindungsgemäßen Variante ist vorgesehen, dass in einem festgelegten Abstand vor oder bei Erreichen eines. Streckenabschnitts, der zum Befahren in dem autonomen Betriebsmodus nicht freigegeben ist, die Steuerungseinrichtung in einen Assistenzmodus versetzt wird, in dem die Steuerungseinrichtung den Benutzer des Kraftfahrzeugs bei der Längs- und/oder Querführung des Kraftfahrzeugs unterstützt.

Abhängig von dem dem entsprechenden Streckenabschnitt, der zum Befahren in einem autonomen Betriebsmodus nicht freigegeben ist, zugeordneten Parameter kann vorgesehen sein, dass lediglich das Betreiben des Kraftfahrzeugs in dem autonomen Betriebsmodus nicht freigegeben ist. Ein Assistenzmodus, bei dem die Steuerungseinrichtung den Benutzer des Kraftfahrzeugs bei der Längs- und/oder Querführung des Kraftfahrzeugs unterstützt, kann sonach abhängig von dem jeweiligen, dem Streckenabschnitt zugeordneten Parameter freigegeben sein. Ist dies der Fall, kann dem Benutzer des Kraftfahrzeugs vor oder bei Erreichen des entsprechenden Streckenabschnitts bevorzugt eine Warnung ausgegeben werden, die dem Benutzer zum einen den bevorstehenden gesperrten Streckenabschnitt, der zum Befahren in dem autonomen Betriebsmodus nicht freigegeben ist, anzeigt und zum anderen den Wechsel der Steuerungseinrichtung aus dem autonomen Betriebsmodus in den Assistenzmodus ankündigt. Der Benutzer ist sonach darüber informiert, dass er zumindest teilweise die Steuerung des Kraftfahrzeugs übernehmen muss. Hier kann ebenfalls vorgesehen sein, dass dem Benutzer eine Auswahl vorgegeben wird, so dass er entscheiden kann, ob der Assistenzmodus oder eine der anderen Handlungsalternativen ausgewählt werden soll.

Spätestens bei Erreichen des entsprechenden Streckenabschnitts kann dem Fahrer in dem Assistenzmodus ein Teil der Steuerung des Kraftfahrzeugs abgenommen werden, da er von der Steuerungseinrichtung bei der Steuerung der Längs- und/oder Querführung des Kraftfahrzeugs unterstützt wird.

Dieser alternative Verfahrensschritt des erfindungsgemäßen Verfahrens kann dahingehend weitergebildet werden, dass die Steuerungseinrichtung in dem Assistenzmodus unter Berücksichtigung eines Benutzerbeteiligungsgrads den Benutzer des Kraftfahrzeugs bei der Längs- und/oder Querführung des Kraftfahrzeugs unterstützt, wobei der Benutzerbeteiligungsgrad festlegt, zu welchem Grad die Längs- und/oder Querführung des Kraftfahrzeugs von dem Benutzer gesteuert wird.

Über diesen Benutzerbeteiligungsgrad kann beispielsweise festgelegt werden, zu welchem Anteil der Benutzer welche Funktion bzw. Einrichtung des Kraftfahrzeugs steuert bzw. zu welchem Anteil diese von der Steuerungseinrichtung übernommen wird. Der Benutzerbeteiligungsgrad kann bevorzugt für jede Funktion bzw. Einrichtung des Kraftfahrzeugs separat eingestellt werden bzw. in dem wenigstens einen Parameter hinterlegt sein. Der Benutzerbeteiligungsgrad kann bevorzugt stufenlos oder in festgelegten Stufen, beispielsweise Prozentwerten, von einem vollständig autonomen Betriebsmodus bis zu einem vollständig manuellen Betriebsmodus variieren. Insbesondere kann der Benutzerbeteiligungsgrad für die Längs- und/oder Querführung des Kraftfahrzeugs festgelegt werden.

Es ist sonach möglich, dass einem entsprechenden gesperrten Streckenabschnitt ein Parameter zugeordnet ist, der einen Benutzerbeteiligungsgrad festlegt. Anhand dieses Benutzerbeteiligungsgrades wird somit festgelegt, inwieweit sich der Benutzer des Kraftfahrzeugs am Fahrbetrieb beteiligen muss, damit der Streckenabschnitt zum Befahren freigegeben ist. Beispielsweise kann hierfür vorgesehen sein, dass der Benutzer des Kraftfahrzeugs wenigstens eine Hand am Lenkrad des Kraftfahrzeugs behält bzw. nur in festgelegten Zeitabständen eine Hand am Lenkrad des Kraftfahrzeugs belässt oder es können in dem Benutzerbeteiligungsgrad Anforderungen hinterlegt sein, die auf ein Mindestmaß an Aufmerksamkeit des Benutzers schließen lassen, so dass dieser beispielsweise beim Befahren des Streckenabschnitts in dem autonomen Betriebsmodus nicht schlafen darf. Insbesondere kann vorgesehen sein, dass sich zumindest ein Benutzer im Kraftfahrzeug befinden muss.

Nach einer erfindungsgemäßen Variante ist vorgesehen, dass in einem festgelegten Abstand vor oder bei Erreichen eines Streckenabschnitts, der zum Befahren in dem autonomen Betriebsmodus nicht freigegeben ist, die Längs- und/oder Querführung des Kraftfahrzeugs durch die Steuerungseinrichtung auf einem alternativen Streckenabschnitt, der zum Befahren in dem autonomen Betriebsmodus freigegeben ist, fortgesetzt wird. Gemäß dieser Ausführungsalternative ist es vorgesehen, dass in einem festgelegten Abstand vor oder bei Erreichen eines entsprechend gesperrten Streckenabschnitts mittels der Navigationseinrichtung eine alternative Route ermittelt wird. Die alternative Route beinhaltet somit wenigstens einen alternativen Streckenabschnitt, der zum Befahren in dem autonomen Betriebsmodus freigegeben ist und den gesperrten Streckenabschnitt, der bisher Teil der Route war, ersetzt. Bevorzugt erfolgt die Neuberechnung der Route automatisch, so dass kein Streckenabschnitt in die Route mit aufgenommen wird, dessen zugeordneter Parameter das Befahren in dem autonomen Betriebsmodus nicht freigibt.

Ebenso kann dem Benutzer des Kraftfahrzeugs eine Auswahl vorgegeben werden, so dass dieser entscheiden kann, ob er beim Erreichen des entsprechenden gesperrten Streckenabschnitts oder in einem festgelegten Abstand vor Erreichen des Streckenabschnitts eine andere Handlungsalternative auswählen möchte oder ob die Steuerungseinrichtung bzw. die Navigationseinrichtung den autonomen Betriebsmodus auf dem alternativen Streckenabschnitt fortsetzen soll. Besonders bevorzugt kann dieses aufgrund einer Benutzerpräferenz vorgegebene Verhalten in der Steuerungseinrichtung des Kraftfahrzeugs vor dem Planen der Route durch den Benutzer hinterlegt werden.

Bei Erreichen des entsprechenden Streckenabschnitts ist hierbei vorgesehen, dass das Kraftfahrzeug nicht in den gesperrten Streckenabschnitt einfährt, sondern gegebenenfalls bei Erreichen des gesperrten Streckenabschnitts wendet oder durch die Steuerungseinrichtung je nach ermittelter Al-ternativroute entlang wenigstens eines alternativen Streckenabschnitts bewegt wird.

Der wenigstens eine Parameter kann wenigstens eine verkehrsrechtliche Regelung und/oder eine temporäre Information, die einen Streckenabschnitt betrifft und/oder eine Regelung über eine Fahrerbeteiligung an der Steuerung der Längs- und/oder Querführung des Kraftfahrzeugs bzw. einem Benutzerbeteiligungsgrad betreffen. Dies bietet den Vorteil, dass verkehrsrechtliche Regelungen, die den Betrieb eines Kraftfahrzeugs in dem autonomen Betriebsmodus betreffen ebenfalls von dem Server abgefragt werden können, so dass die Steuerungseinrichtung bzw. die Navigationseinrichtung des Kraftfahrzeugs stets auf dem neuesten Stand ist. Ferner kann der Parameter eine temporäre Information betreffen, die wiederum einen Streckenabschnitt betrifft. Dies kann beispielsweise eine temporäre Baustelle bzw. das temporäre Verbot des Befahrens des entsprechenden Streckenabschnitts in dem autonomen Betriebsmodus darstellen. Wie zuvor erläutert kann der Parameter ferner einen Benutzerbeteiligungsgrad umfassen, der eine Regelung über eine Fahrerbeteiligung der Steuerung wenigstens einer Funktion und/oder einer Einrichtung des Kraftfahrzeugs betrifft, insbesondere der Steuerung der Längs- und/oder Querführung des Kraftfahrzeugs. Sonach kann beispielsweise in einem Streckenabschnitt lediglich das Fahren in dem autonomen Betriebsmodus nicht freigegeben sein, das Betreiben in einem assistierten Betriebsmodus bzw. eine definierte Fahrerbeteiligung kann jedoch das ansonsten autonome Betreiben des Kraftfahrzeugs ermöglichen.

Besonders bevorzugt wird der wenigstens eine Parameter durch eine Abfrage der Steuerungseinrichtung und/oder der Navigationseinrichtung von dem Server permanent oder in festgelegten Zeitabständen auf Gültigkeit überprüft. Sonach kann der Parameter stets aktuell auf der Steuerungseinrichtung bzw. der Navigationseinrichtung gespeichert bleiben. Sofern festgestellt wird, dass die Gültigkeit des wenigstens einen Parameters abgelaufen ist, das heißt mithin dass eine neuere Version des Parameters verfügbar ist, kann diese selbstverständlich von dem Server abgerufen werden. Dadurch wird sichergestellt, dass zu jeder Zeit beim Befahren der entsprechenden Route jeder jedem Streckenabschnitt zugeordnete Parameter auf dem neuesten Stand ist und das Befahren des entsprechenden Streckenabschnitts tatsächlich freigegeben ist oder keine Streckenabschnitte bei der Planung unberücksichtigt bleiben, die zum aktuellen Zeitpunkt bzw. dem Zeitpunkt des Befahrens nicht gesperrt sind.

Daneben betrifft die Erfindung ein Kraftfahrzeug nach dem Anspruch 6, umfassend eine Navigationseinrichtung mit gespeicherten Streckenabschnitten und eine Steuerungseinrichtung zur Längs- und/oder Querführung des Kraftfahrzeugs in einem autonomen Betriebsmodus, wobei wenigstens einem Streckenabschnitt wenigstens ein Parameter zugeordnet ist, der festlegt, ob der Streckenabschnitt zum Betreiben des Kraftfahrzeugs in dem autonomen Betriebsmodus freigegeben ist. Das Kraftfahrzeug ist mithin zur Durchführung des erfindungsgemäßen Verfahrens ausgebildet. Insbesondere kann mittels der Navigationseinrichtung und/oder mittels der Steuerungseinrichtung der wenigstens eine Parameter von einem Server über eine drahtlose Kommunikationsverbindung abgerufen werden.

Der Server über den mittels der drahtlosen Kommunikationsverbindung die Navigationseinrichtung und/oder die Steuerungseinrichtung den wenigstens einen Parameter abruft, kann zum einen ein zentraler Server sein, auf dem die entsprechenden Parameter, die den einzelnen Streckenabschnitten zugeordnet sind, gespeichert sind. Zudem kann ein regionales Netz von einzelnen Servern und/oder Sendeeinrichtungen für Car-to-Car bzw. Infrastructureto-Car Kommunikation vorgesehen sein, die jeweils einen bestimmten Bereich bzw. eine bestimmte Anzahl von Streckenabschnitten, bevorzugt im Umkreis des jeweiligen Servers bzw. der jeweiligen Sendeeinrichtung, abdecken. Sonach ist es nicht nötig, von einem zentralen Server sämtliche Parameter für sämtliche Streckenabschnitte abzurufen, sondern die Abfrage der Parameter kann sich auf Streckenabschnitte beschränken, die in einem definierten Abschnitt, bevorzugt lediglich diejenigen Streckenabschnitte, die auf der geplanten Route des Kraftfahrzeugs liegen. Bevorzugt kann sonach jeder Server an einem festgelegten Punkt, beispielsweise eine Ampelanlage an einer großen Kreuzung, angeordnet sein.

Daneben ist es möglich eine drahtlose Kommunikationsverbindung von einem Server über Verkehrsfunk abzuwickeln, über den die entsprechenden Parameter an die Navigationseinrichtung und/oder die Steuerungseinrichtung übertragen werden. Diese Kommunikationsverbindung erlaubt lediglich den Empfang der Parameter durch die Navigationseinrichtung.

Daneben betrifft die Erfindung ein Kraftfahrzeug, umfassend eine Navigationseinrichtung mit gespeicherten Streckenabschnitten und eine Steuerungseinrichtung zur Längs- und/oder Querführung des Kraftfahrzeugs in einem autonomen Betriebsmodus, wobei wenigstens einem Streckenabschnitt wenigstens ein Parameter zugeordnet ist, der festlegt, ob der Streckenabschnitt zum Befahren in dem autonomen Betriebsmodus freigegeben ist, wobei die Navigationseinrichtung und/oder die Steuerungseinrichtung dazu ausgebildet sind, den wenigstens einen Parameter über eine drahtlose Kommunikationsverbindung von wenigstens einem Server abzurufen.

Selbstverständlich sind alle zum erfindungsgemäßen Verfahren genannten Vorteile, Einzelheiten und Merkmale auch auf das erfindungsgemäße Kraftfahrzeug übertragbar.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Seitenansicht eines erfindungsgemäßen Kraftfahrzeugs;
- Fig. 2: eine Draufsicht auf das erfindungsgemäße Kraftfahrzeug von Fig. 1 in einer ersten Verkehrssituation;
- Fig. 3: eine Draufsicht auf das erfindungsgemäße Kraftfahrzeug von Fig. 1 in einer zweiten Verkehrssituation; und
- Fig. 4: eine Draufsicht auf das erfindungsgemäße Kraftfahrzeug von Fig. 1 in einer dritten Verkehrssituation.

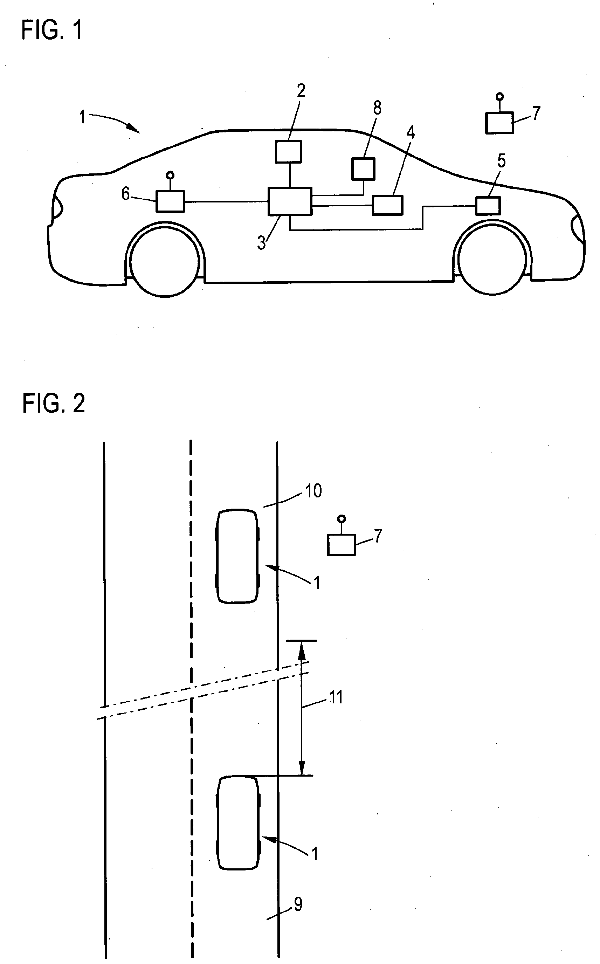

Fig. 1 zeigt ein Kraftfahrzeug 1, umfassend eine Navigationseinrichtung 2 mit gespeicherten Streckenabschnitten und einer Steuerungseinrichtung 3. Die Steuerungseinrichtung 3 ist dazu ausgebildet eine Längsführungseinrichtung 4 und eine Querführungseinrichtung 5 des Kraftfahrzeugs 1 zu steuern. Insbesondere kann die Steuerungseinrichtung 3 in einem autonomen Betriebsmodus die Längsführungseinrichtung 4 und die Querführungseinrichtung 5 autonom steuern, so dass das Kraftfahrzeug 1 autonom bewegt, mithin also pilotiert gefahren wird. Den Streckenabschnitten ist jeweils ein Parameter zugeordnet, der festlegt, ob der Streckenabschnitt zum Befahren in einem autonomen Betriebsmodus freigegeben ist. Die Längsführungseinrichtung 4 und die Querführungseinrichtung 5 umfassen sämtliche Einrichtungen bzw. Funktionen des Kraftfahrzeugs 1, die für ein autonomes Bewegen des Kraftfahrzeugs 1 erforderlich sind, mithin also alle Komponenten des Kraftfahrzeugs 1, die ein pilotiertes Fahren ermöglichen. Das Kraftfahrzeug 1 weist ferner eine Kommunikationseinrichtung 6 auf, die dazu ausgebildet ist, eine drahtlose Kommunikationsverbindung zu einem Server 7 herzustellen, der außerhalb des Kraftfahrzeugs 1 angeordnet ist. Der wenigstens eine Parameter kann sonach von der Steuerungseinrichtung 3 von dem Server 7 über eine drahtlose Kommunikationsverbindung durch die Kommunikationseinrichtung 6 abgerufen werden. Der wenigstens eine Parameter kann anschließend in der Navigationseinrichtung 2 gespeichert werden.

Das Kraftfahrzeug 1 weist ferner eine Anzeigeeinrichtung 8 auf, die dazu ausgebildet ist, einem Benutzer des Kraftfahrzeugs 1 Informationen darzustellen. Insbesondere kann mittels der Anzeigeeinrichtung 8 eine Warnung darüber ausgegeben werden, dass ein Streckenabschnitt vor dem Kraftfahrzeug 1 liegt, der zum Befahren in dem autonomen Betriebsmodus nicht freigegeben ist. Gemäß diesem Ausführungsbeispiel wird in einem definierten Abstand vor dem Erreichen des Streckenabschnitts und bei Erreichen des Streckenabschnitts jeweils eine entsprechende Warnung ausgegeben.

Die Steuerungseinrichtung 3 steuert die Kommunikationseinrichtung 6 in festgelegten Zeitabständen so, dass diese mit dem externen Server 7 eine Kommunikationsverbindung aufbaut, über die die Steuerungseinrichtung 3 die Gültigkeit der den gespeicherten Streckenabschnitten zugeordneten Parametern überprüft. Dies geschieht bevorzugt über einen Zeitstempel, der den Parametern aufgeprägt oder zugeordnet wird. Weist nun ein Parameter der in der Navigationseinrichtung 2 gespeichert ist bzw. der einem in der Navigationseinrichtung 2 gespeicherten Streckenabschnitten zugeordnet ist, einen älteren Zeitstempel auf als der entsprechende Parameter, der auf dem Server 7 hinterlegt ist, so ruft die Steuerungseinrichtung 3 den entsprechenden Parameter vom Server 7 über die Kommunikationseinrichtung 6 ab und speichert ihn in der Navigationseinrichtung 2. Dieser Vorgang erfolgt zur Reduzierung vom Datenaufkommen lediglich für Parameter, die Streckenabschnitten zugeordnet sind, die durch das Kraftfahrzeug 1 befahren werden sollen bzw. die auf einer durch die Navigationseinrichtung 2 geplanten Route liegen.

Fig. 2 zeigt eine Draufsicht des Kraftfahrzeug 1 von Fig. 1 in einer ersten Verkehrssituation. Das Kraftfahrzeug 1 befindet sich zunächst auf einem Streckenabschnitt 9, der an einen Streckenabschnitt 10 angrenzt. Der Streckenabschnitt 10 ist für ein Befahren in dem autonomen Betriebsmodus nicht freigegeben. Der Streckenabschnitt 10 weist mithin einen Parameter auf, der festlegt, dass der Streckenabschnitt 10 zum Befahren in dem autonomen Betrieb nicht freigegeben ist. Der Parameter des Streckenabschnitts 9 legt hingegen fest, dass das Kraftfahrzeug 1 den Streckenabschnitt 9 in dem autonomen Betriebsmodus befahren kann. Das Kraftfahrzeug 1 wird sonach durch die Steuerungseinrichtung 3 auf dem Streckenabschnitt 9 in dem autonomen Betriebsmodus gesteuert.

In einem Abstand 11 zwischen der momentanen Position des Kraftfahrzeugs 1 und dem Streckenabschnitt 10, der für das Befahren in dem autonomen Betriebsmodus gesperrt ist, wird über die Anzeigeeinrichtung 8 eine Warnung an den Benutzer des Kraftfahrzeugs 1 ausgegeben, die ihn darüber informiert, dass im Abstand 11 vor dem Kraftfahrzeug 1 der gesperrte Streckenabschnitt 10 liegt. Der Benutzer des Kraftfahrzeugs 1 kann sonach auf der Anzeigeeinrichtung 8, die gemäß diesem Ausführungsbeispiel als Touchscreen ausgebildet ist, die Handlungsalternative wählen, die durch die Steuerungseinrichtung 3 ausgeführt soll. Gemäß dem Parameter, der dem Streckenabschnitt 10 zugeordnet ist, und der von der Steuerungseinrichtung 3 von dem Server 7 über die Kommunikationsverbindung mittels der Kommunikationseinrichtung 6 abgerufen wurde, wird festgelegt, dass der Benutzerbeteiligungsgrad eine zumindest teilweise Beteiligung des Benutzers am Fahrbetrieb erfordert. Mithin ist somit ein Assistenzmodus der Steuerungseinrichtung 3 zum Befahren des Streckenabschnitts 10 freigegeben.

Der Benutzer des Kraftfahrzeugs 1 führt daher eine entsprechende Eingabe auf der Anzeigeeinrichtung 8 durch, so dass bei Erreichen des Streckenabschnitts 10 die Steuerungseinrichtung 3 in den Assistenzmodus versetzt wird. Demzufolge unterstützt die Steuerungseinrichtung 3 den Benutzer des Kraftfahrzeugs 1 bei der Steuerung des Kraftfahrzeugs 1. Bei Erreichen des Streckenabschnitts 10 wird dem Benutzer erneut eine Warnung auf der Anzeigeeinrichtung 8 dargestellt, die ihn darüber informiert, dass er nun den Fahrbetrieb übernehmen muss.

Nach Verlassen des Streckenabschnitts 10 bzw. bei Erreichen eines weiteren Streckenabschnitts, für den ein Befahren in dem autonomen Betriebsmodus freigegeben ist, kann die Steuerungseinrichtung 3 wieder in autonomen Betriebsmodus versetzt werden, in dem das Kraftfahrzeug 1 pilotiert gefahren wird.

Ebenso ist es in der in Fig. 2 dargestellten Verkehrssituation möglich, dass der Benutzer des Kraftfahrzeugs 1 auf der Anzeigeeinrichtung 8 des Kraftfahrzeugs 1 auswählt, dass die Steuerungseinrichtung 3 in den manuellen Betriebsmodus versetzt wird. In dem manuellen Betriebsmodus übernimmt der Benutzer vollständig manuell die Steuerung des Kraftfahrzeugs 1, mithin die Steuerung der Querführungseinrichtung 5 und der Längsführungseinrichtung 4. Hier wird dem Benutzer ebenfalls im Abstand 11 zwischen dem Kraftfahrzeug 1 und dem Streckenabschnitt 10 angezeigt, dass der Streckenabschnitt 10 vor dem Kraftfahrzeug 1 liegt, in dem ein Befahren in dem autonomen Betriebsmodus nicht freigegeben ist. Der Fahrer wählt hierzu den manuellen Betriebsmodus der Steuerungseinrichtung 3 aus. Bei Erreichen des Streckenabschnitts 10 geht eine erneute Warnung an den Benutzer auf der Anzeigeeinrichtung 8. Diese informiert den Benutzer darüber, dass er nun die Steuerungsaufgabe des Kraftfahrzeugs 1 vollständig manuell übernehmen muss.

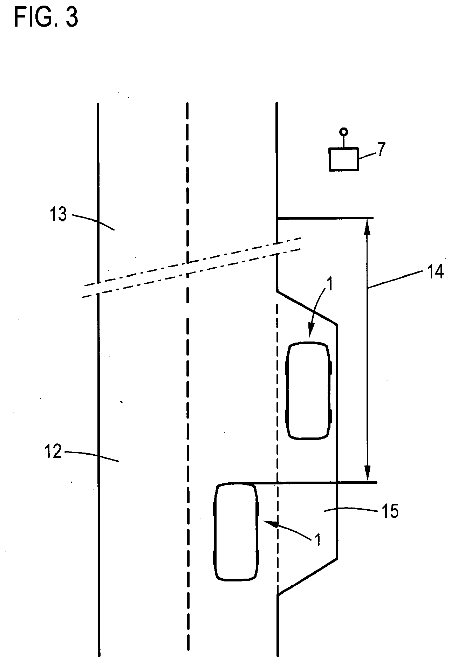

Fig. 3 zeigt das Kraftfahrzeug 1 von Fig. 1 in einer zweiten Verkehrssituation. Das Kraftfahrzeug 1 befindet sich in Fig. 3 auf einem Streckenabschnitt 12, auf dem das Befahren in dem autonomen Betriebsmodus freigegeben ist. An den Streckenabschnitt 12 grenzt ein Streckenabschnitt 13 an, auf dem ein Befahren in dem autonomen Betriebsmodus nicht freigegeben ist. In einem Abstand 14 zwischen dem Kraftfahrzeug 1 und dem Streckenabschnitt 13 wird in der zuvor beschriebenen Weise eine Warnung auf der Anzeigeeinrichtung 8 für den Benutzer des Kraftfahrzeugs 1 angezeigt. Da der Benutzer des Kraftfahrzeugs 1 auf diese Warnung nicht reagiert, wird das Kraftfahrzeug 1 aufgrund einer entsprechenden Steuerung durch die Steuerungseinrichtung 3 auf eine Parkfläche 15 bewegt, die sich vor dem Streckenabschnitt 13 am Streckenabschnitt 12 befindet. Auf dem Parkabschnitt 15 wird das Kraftfahrzeug 1 durch die Steuerungseinrichtung 3 in einen sicheren Zustand versetzt und geparkt. Insbesondere wird dazu die Feststellbremse betätigt.

Dieser Zustand kann beibehalten werden, bis eine Route durch die Navigationseinrichtung 2 ermittelt wurde, die ein Befahren des Streckenabschnitts 13 entbehrlich macht. Ebenfalls ist es möglich, auf eine Eingabe des Benutzers des Kraftfahrzeugs 1 zu warten, ob dieser eine Umplanung wünscht oder den Streckenabschnitt 13 gemäß den Anforderungen durchfahren möchte, die im Parameter, der dem Streckenabschnitt 13 zugeordnet ist, hinterlegt sind. Diese können beispielsweise ein manuelles Steuern des Kraftfahrzeugs 1 bzw. ein assistiertes Steuern des Kraftfahrzeugs 1 vorsehen.

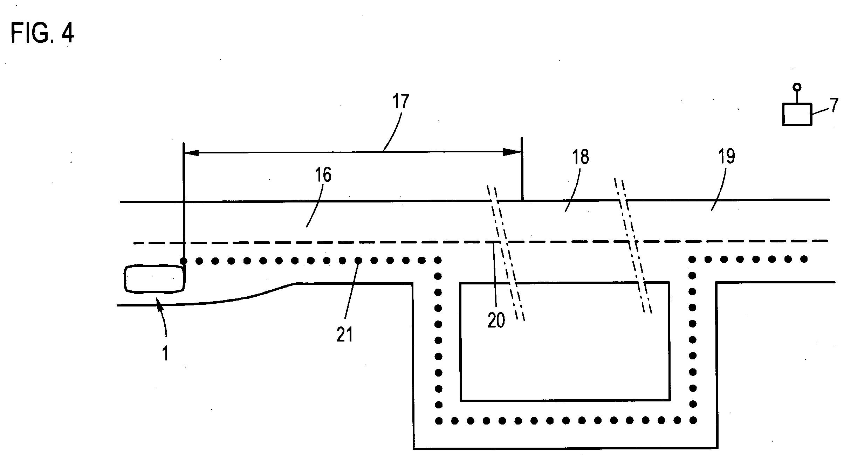

Fig. 4 zeigt das Kraftfahrzeug 1 auf einem Streckenabschnitt 16 in einem Abstand 17 vor einem Streckenabschnitt 18, der sich an den Streckenabschnitt 16 anschließt. Auf dem Streckenabschnitt 16 ist ein Befahren in dem autonomen Betriebsmodus freigegeben, auf dem Streckenabschnitt 18 ist das Befahren in dem autonomen Betriebsmodus nicht freigegeben. Der Streckenabschnitt 18 schließt sich wiederum an einen Streckenabschnitt 19 an, auf dem das Befahren in dem autonomen Betriebsmodus wieder freigegeben ist. Ein direktes Durchfahren der Streckenabschnitte 16, 18 und 19, also ein Erreichen des Streckenabschnitts 19 auf dem kürzesten Weg durch den Streckenabschnitt 18 ist somit in dem autonomen Betriebsmodus nicht möglich. Der Parameter, der dem Streckenabschnitt 18 zugeordnet ist, enthält die Information, dass zumindest eine teilweise Beteiligung eines Benutzers des Kraftfahrzeugs 1 am Fahrbetrieb gefordert wird. Allerdings wird das Kraftfahrzeug 1 von der Steuerungseinrichtung 3 pilotiert gefahren, ohne dass sich ein Benutzer im Kraftfahrzeug 1 befindet. Somit ist ein Erfüllen der Anforderungen, die dem Parameter zugeordnet sind, nicht möglich. Die Steuerungseinrichtung 3 steuert daher die Navigationseinrichtung 2 entsprechend an, so dass die Navigationseinrichtung 2 eine von einer Route 20, die durch die Streckenabschnitte 16, 18 und 19 direkt verläuft, abweichende Route 21 plant. Die Route 20 ist in Fig. 4 gestrichelt dargestellt. Die Route 21 ist wiederum gepunktet dargestellt. Die Route 21 führt vom Streckenabschnitt 16 auf einen Streckenabschnitt 22, der ein Umfahren des gesperrten Streckenabschnitts 18 ermöglicht und somit den Streckenabschnitt 16 mit dem Streckenabschnitt 19 verbindet. Auf diesem Weg ist ein Erreichen des Streckenabschnitts 19 durch ein Befahren des Streckenabschnitts 22, also ein durchgängiges Befahren in dem autonomen Betriebsmodus möglich.

Selbstverständlich sind sämtliche vorgenannten Ausführungsbeispiele beliebig miteinander kombinierbar. Die Streckenabschnitte gemäß diesem Ausführungsbeispielen stellen lediglich schematisch Straßenabschnitte dar und sind ebenso als Bereiche, Straßen oder weitläufige Gebiete bzw. Straßennetze zu verstehen. Mithin wird hierdurch erreicht, dass jeder Bereich für das Befahren in einem autonomen Modus des Kraftfahrzeugs 1 freigegeben, beschränkt freigegeben oder lediglich in einem manuellen Betriebsmodus freigegeben ist. Besonders vorteilhaft wird hierdurch erreicht, dass der jeweilige Parameter stets durch eine Steuerung der Steuerungseinrichtung 3 entsprechend mittels der Kommunikationseinrichtung 6, die eine Kommunikationsverbindung mit dem Server 7 herstellt, auf Gültigkeit überprüft und gegebenenfalls aktualisiert wird.

## Patentansprüche

1. Verfahren zum Betreiben eines Kraftfahrzeugs (1), das eine Navigationseinrichtung (2) mit gespeicherten Streckenabschnitten (9, 10, 12, 13, 16, 18, 19, 22) und eine Steuerungseinrichtung (3) zur Längs- und/oder Querführung des Kraftfahrzeugs (1) in einem autonomen Betriebsmodus aufweist, wobei wenigstens einem Streckenabschnitt (9, 10, 12, 13, 16, 18, 19, 22) wenigstens ein Parameter zugeordnet ist, der festlegt, ob der Streckenabschnitt (9, 10, 12, 13, 16, 18, 19, 22) zum Befahren in dem autonomen Betriebsmodus freigegeben ist, wobei der wenigstens eine Parameter von der Navigationseinrichtung (2) und/oder von der Steuerungseinrichtung (3) über eine drahtlose Kommunikationsverbindung von einem Server abgerufen wird, wobei wenigstens ein Streckenabschnitt (10, 13, 18) in der Navigationseinrichtung (2) hinterlegt ist, der zum Befahren in dem autonomen Betriebsmodus nicht freigegeben ist,
**dadurch gekennzeichnet,**
**dass** in einem festgelegten Abstand (11, 14, 17) vor oder bei Erreichen eines Streckenabschnitts (10, 13, 18), der zum Befahren in dem autonomen Betriebsmodus nicht freigegeben ist, die Steuerungseinrichtung (3) in einen Assistenzmodus versetzt wird, in dem die Steuerungseinrichtung den Benutzer des Kraftfahrzeugs bei der Längs- und/oder der Querführung des Kraftfahrzeugs unterstützt oder dass in einem festgelegten Abstand (11, 14, 17) vor oder bei Erreichen eines Streckenabschnitts (10, 13, 18), der zum Befahren in dem autonomen Betriebsmodus nicht freigegeben ist, mittels der Navigationseinrichtung (2) eine alternative Route ermittelt wird, die wenigstens einen alternativen Streckenabschnitt, der zum Befahren in dem autonomen Betriebsmodus freigegeben ist, beinhaltet, wonach die Längs- und/oder die Querführung des Kraftfahrzeugs (1) durch die Steuerungseinrichtung (3) auf dem alternativen Streckenabschnitt (22) fortgesetzt wird.

2. Verfahren nach Anspruch 1,
**dadurch gekennzeichnet,**
**dass** vor und/oder bei Erreichen eines Streckenabschnitts (10, 13, 16), der zum Befahren in dem autonomen Betriebsmodus nicht freigegeben ist, eine Warnung ausgegeben wird.

3. Verfahren nach Anspruch 1 oder 2,
**dadurch gekennzeichnet,**
**dass** die Steuerungseinrichtung in dem Assistenzmodus unter Berücksichtigung eines Benutzerbeteiligungsgrads, den Benutzer des Kraftfahrzeugs (1) bei der Längs- und/oder der Querführung des Kraftfahrzeugs unterstützt, wobei der Benutzerbeteiligungsgrad festlegt zu welchem Grad die Längs- und/oder die Querführung des Kraftfahrzeugs (1) von dem Benutzer gesteuert wird.

4. Verfahren nach einem der vorangehenden Ansprüche,
**dadurch gekennzeichnet,**
**dass** der wenigstens eine Parameter wenigstens eine verkehrsrechtliche Regelung und/oder eine temporäre Information, die einen Streckenabschnitt betrifft und/oder eine Regelung über eine Fahrerbeteiligung an der Steuerung der Längs- und/oder der Querführung des Kraftfahrzeugs (1) betrifft.

5. Verfahren nach einem der vorangehenden Ansprüche,
**dadurch gekennzeichnet,**
**dass** der wenigstens eine Parameter durch eine Abfrage der Steuerungseinrichtung (3) und/oder der Navigationseinrichtung (2) von dem Server (7) permanent oder in festgelegten Zeitabständen auf Gültigkeit überprüft wird.

6. Kraftfahrzeug (1), umfassend eine Navigationseinrichtung (2) mit gespeicherten Streckenabschnitten (9, 10, 12, 13, 16, 18, 19, 22) und eine Steuerungseinrichtung (3) zur Längs- und/oder Querführung des Kraftfahrzeugs (1) in einem autonomen Betriebsmodus, wobei wenigstens einem Streckenabschnitt (9, 10, 12, 13, 16, 18, 19, 22) wenigstens ein Parameter zugeordnet ist, der festlegt, ob der Streckenabschnitt (9, 10, 12, 13, 16, 18, 19, 22) zum Befahren in dem autonomen Betriebsmodus freigegeben ist,
**dadurch gekennzeichnet, dass** die Navigationseinrichtung (2) und die Steuerungseinrichtung (3) zur Durchführung des Verfahrens nach einem der vorangehenden Ansprüche ausgebildet sind.

## Claims

1. Method for operating a motor vehicle (1) which has a navigation device (2) with stored route sections (9, 10, 12, 13, 16, 18, 19, 22) and a control apparatus (3) for longitudinal and/or transverse guidance of the motor vehicle (1) in an autonomous operating mode, wherein at least one route section (9, 10, 12, 13, 16, 18, 19, 22) is assigned at least one parameter which defines whether the route section (9, 10, 12, 13, 16, 18, 19, 22) is enabled for travel in the autonomous operating mode, wherein the at least one parameter is retrieved from a server by the navigation device (2) and/or by the control apparatus (3) via a wireless communication link, wherein at least one route section (10, 13, 18) which is not enabled for travel in the autonomous operating mode being stored in the navigation device (2),
**characterised in that**,
at a defined distance (11, 14, 17) before or on reaching a route section (10, 13, 18) which is not enabled for travel in the autonomous operating mode, the control apparatus (3) is set to an assistance mode in which the control apparatus assists the user of the motor vehicle in the longitudinal and/or transverse guidance of the motor vehicle, or **in that**, at a defined distance (11, 14, 17) before or on reaching a route section (10, 13, 18) which is not enabled for travel in the autonomous operating mode, an alternative route is determined by means of the navigation device (2), which route includes at least one alternative route section which is enabled for travel in the autonomous operating mode, after which the longitudinal and/or transverse guidance of the motor vehicle (1) is continued by the control apparatus (3) on the alternative route section (22).

2. Method according to claim 1,
**characterised in that**
a warning is output before and/or upon reaching a route section (10, 13, 16) which is not enabled for travel in the autonomous operating mode.

3. Method according to claim 1 or 2,
**characterised in that**
the control apparatus, in the assistance mode, taking into account a degree of user involvement, assists the user of the motor vehicle (1) in the longitudinal and/or lateral guidance of the motor vehicle, wherein the degree of user involvement defines to what degree the longitudinal and/or lateral guidance of the motor vehicle (1) is controlled by the user.

4. Method according to any one of the preceding claims,
**characterised in that**
the at least one parameter relates to at least one traffic law regulation and/or temporary information relating to a route section and/or a regulation relating to driver participation in the control of the longitudinal and/or lateral guidance of the motor vehicle (1).

5. Method according to any one of the preceding claims,
**characterised in that**
the at least one parameter is checked for validity by a query of the control apparatus (3) and/or the navigation device (2) from the server (7) permanently or at fixed time intervals.

6. Motor vehicle (1), comprising a navigation device (2) with stored route sections (9, 10, 12, 13, 16, 18, 19, 22) and a control apparatus (3) for longitudinal and/or lateral guidance of the motor vehicle (1) in an autonomous operating mode, wherein at least one route section (9, 10, 12, 13, 16, 18, 19, 22) is assigned at least one parameter which defines whether the route section (9, 10, 12, 13, 16, 18, 19, 22) is enabled for travel in the autonomous operating mode,
**characterised in that**
the navigation device (2) and the control apparatus (3) are designed to carry out the method according to any one of the preceding claims.

## Revendications

1. Procédé pour faire fonctionner un véhicule automobile (1) qui présente un appareil de navigation (2) avec des sections d'itinéraire mémorisées (9, 10, 12, 13, 16, 18, 19, 22) et un appareil de commande (3) pour le guidage longitudinal et/ou transversal du véhicule automobile (1) dans un mode de fonctionnement autonome, dans lequel au moins un paramètre est associé à au moins une section d'itinéraire (9, 10, 12, 13, 16, 18, 19, 22), lequel détermine si la section d'itinéraire (9, 10, 12, 13, 16, 18, 19, 22) est autorisée à être parcourue dans le mode de fonctionnement autonome, dans lequel l'au moins un paramètre est extrait d'un serveur par l'appareil de navigation (2) et/ou par l'appareil de commande (3) via une liaison de communication sans fil, dans lequel au moins une section d'itinéraire (10, 13, 18) est stockée dans l'appareil de navigation (2), laquelle n'est pas autorisée à être parcourue dans le mode de fonctionnement autonome,
**caractérisé en ce que**,
à une distance définie (11, 14, 17) avant ou lors de l'atteinte d'une section d'itinéraire (10, 13, 18), laquelle n'est pas autorisée à la circulation en mode de fonctionnement autonome, l'appareil de commande (3) est réglé sur un mode d'assistance dans lequel l'appareil de commande assiste l'utilisateur du véhicule automobile dans le guidage longitudinal et/ou transversal du véhicule automobile, ou **en ce qu'**un trajet alternatif est déterminé au moyen de l'appareil de navigation (2) à une distance définie (11, 14, 17) avant ou lors de l'atteinte d'un tronçon d'itinéraire (10, 13, 18) non autorisé à la circulation en mode de fonctionnement autonome, lequel trajet alternatif contient au moins un tronçon d'itinéraire alternatif qui est autorisé à la circulation en mode de fonctionnement autonome, après quoi le guidage longitudinal et/ou transversal du véhicule automobile (1) est poursuivi par l'appareil de commande (3) sur la section d'itinéraire alternatif (22).

2. Procédé selon la revendication 1,
**caractérisé en ce que**
un avertissement est émis avant et/ou lors de l'atteinte d'une section d'itinéraire (10, 13, 16) qui n'est pas libéré pour la circulation en mode de fonctionnement autonome.

3. Procédé selon la revendication 1 ou 2,
**caractérisé en ce que**,
dans le mode assistance, l'appareil de commande assiste l'utilisateur du véhicule automobile (1) dans le guidage longitudinal et/ou transversal du véhicule automobile, en tenant compte d'un degré d'implication de l'utilisateur, dans lequel le degré d'implication de l'utilisateur détermine dans quelle mesure le guidage longitudinal et/ou transversal du véhicule automobile (1) est commandé par l'utilisateur.

4. Procédé selon l'une quelconque des revendications précédentes,
**caractérisé en ce que**
l'au moins un paramètre concerne au moins une réglementation du droit de la circulation et/ou une information temporaire qui concerne une section d'itinéraire et/ou une réglementation sur la participation du conducteur à la commande du guidage longitudinal et/ou transversal du véhicule automobile (1).

5. Procédé selon l'une quelconque des revendications précédentes,
**caractérisé en ce que**
la validité d'au moins un paramètre est vérifiée par une interrogation de l'appareil de commande (3) et/ou de l'appareil de navigation (2) à partir du serveur (7) en permanence ou à des intervalles de temps fixes.

6. Véhicule automobile (1), comprenant un appareil de navigation (2) avec des sections d'itinéraire (9, 10, 12, 13, 16, 18, 19, 22) mémorisées et un appareil de commande (3) pour le guidage longitudinal et/ou transversal du véhicule automobile (1) dans un mode de fonctionnement autonome, dans lequel au moins une section d'itinéraire (9, 10, 12, 13, 16, 18, 19, 22) est affectée à au moins un paramètre, lequel détermine si la section d'itinéraire (9, 10, 12, 13, 16, 18, 19, 22) est autorisée à être parcourue dans le mode de fonctionnement autonome,
**caractérisé en ce que**
l'appareil de navigation (2) et l'appareil de commande (3) sont réalisés pour mettre en œuvre le procédé selon l'une quelconque des revendications précédentes.
